# EUROPEAN PATENT APPLICATION

(11) **EP 4 708 401 A1**
(43) Date of publication of application: **11.03.2026**
(21) Application number: 23938887.9
(22) Date of filing: 31.05.2023
(51) Int. Cl.: H01M 4/583, H01M 4/133, H01M 10/054

(54) **NEGATIVE ELECTRODE, PREPARATION METHOD THEREFOR, BATTERY CELL COMPRISING SAME, BATTERY, AND ELECTRICAL APPARATUS**

(71) Applicant: Contemporary Amperex Technology Co., Limited, Ningde, Fujian 352100 (CN)
(72) Inventor: WANG, Baoying, Ningde, Fujian 352100 (CN); XU, Xiaofu, Ningde, Fujian 352100 (CN)
(74) Representative: Gong, Jinping
(86) International application number: PCT/CN2023/097562
(87) International publication number: WO 2024/243896

(57) **Abstract**

This application provides a negative electrode and a preparation method therefor, a battery cell containing the same, a battery, and an electric apparatus, where the negative electrode includes a negative electrode current collector and a coating disposed on at least one surface of the negative electrode current collector, the coating includes a flexible carbon material, the flexible carbon material includes micropores with a pore diameter less than or equal to 0.8 nm, a pore volume of the micropores with a pore diameter less than or equal to 0.8 nm is denoted as V_{mic}, a pore volume of the flexible carbon material is denoted as Vₜₒₜₐₗ, both in units of cm³/g, and V_{mic}:Vₜₒₜₐₗ≥65:100.

## Description

### TECHNICAL FIELD

This application relates to a negative electrode and a preparation method therefor, a battery cell containing the same, a battery, and an electric apparatus.

### BACKGROUND

In recent years, batteries have been widely used in energy storage power systems such as hydropower, thermal power, wind power, and solar power plants, as well as in various fields including power tools, electric bicycles, electric motorcycles, electric vehicles, military equipment, and aerospace. High energy density is an irreversible trend in the future development of batteries, and anode-free metal batteries have attracted significant attention due to their high energy density. However, anode-free metal batteries often suffer from low Coulombic efficiency and short cycle life. The above statements are provided solely to furnish background information related to this application and do not necessarily constitute prior art.

### SUMMARY

This application provides a negative electrode and a preparation method therefor, a battery cell containing the same, a battery, and an electric apparatus, which ensure a high energy density and excellent cycling performance of a battery.

According to a first aspect of this application, a negative electrode is provided, including a negative electrode current collector and a coating disposed on at least one surface of the negative electrode current collector, where the coating includes a flexible carbon material, where the flexible carbon material includes micropores with a pore diameter less than or equal to 0.8 nm, a pore volume of the micropores with a pore diameter less than or equal to 0.8 nm is denoted as V_{mic}, a pore volume of the flexible carbon material is denoted as Vₜₒₜₐₗ, both in units of cm³/g, and V_{mic}:Vₜₒₜₐₗ≥65:100.

The negative electrode provided in this embodiment of this application includes a negative electrode current collector and a coating disposed on at least one surface of the negative electrode current collector, where the coating includes a flexible carbon material. The flexible carbon material may exhibit excellent conductivity and stability, enabling the construction of an effective conductive network in the negative electrode, thereby reducing an internal resistance of the battery. The flexible carbon material includes micropores with a pore diameter less than or equal to 0.8 nm, and a ratio of the pore volume V_{mic} of the micropores with a pore diameter less than or equal to 0.8 nm to the pore volume Vₜₒₜₐₗ of the flexible carbon material is V_{mic}:Vₜₒₜₐₗ≥65:100, whereby the flexible carbon material has a pore structure primarily including micropores with a pore diameter less than or equal to 0.8 nm. These micropores are typically located at the positions of edge carbon atoms in the flexible carbon material, which can reduce an overpotential of a metal (such as sodium), and serve as initial nucleation sites during deposition of a metal, thereby lowering a nucleation barrier of the metal, thus facilitating the regulation of a metal morphology during deposition on the negative electrode. Therefore, during battery charge, a uniform metal layer can be formed on the negative electrode surface provided in this embodiment of this application, and dendrites can be reduced, particularly, formation and growth of dendrites with sharp morphologies can be alleviated, thereby ensuring the high energy density and excellent cycling performance of the battery.

In any embodiment, V_{mic}:Vₜₒₜₐₗ≥70:100, optionally, 85:100≤V_{mic}:Vₜₒₜₐₗ≤96:100. Through further adjustment of the ratio of the pore volume V_{mic} of the micropores with a pore diameter less than or equal to 0.8 nm to the pore volume Vₜₒₜₐₗ of the flexible carbon material to be within the above range, the metal deposition morphology on the negative electrode can be further regulated, contributing to a high energy density and excellent cycling performance of the battery.

In any embodiment, the flexible carbon material includes one or more of carbon nanotubes, carbon fibers, and graphene.

In any embodiment, the carbon nanotubes include one or more of single-walled carbon nanotubes, multi-walled carbon nanotubes, and single-walled/multi-walled blended carbon nanotubes.

In any embodiment, the graphene includes one or more of single-layer graphene, bilayer graphene, and multi-layer graphene.

In any embodiment, the carbon fibers include one or more of polymer-based carbon fibers and pitch-based carbon fibers.

In any embodiment, a surface of the flexible carbon material has an oxygen-containing functional group, and a content of the oxygen-containing functional group in the flexible carbon material is 7at% to 15at%, optionally 8at% to 13at%. The oxygen-containing functional group can modify the flexible carbon material, expanding an interlayer spacing and increasing a metal storage space. Additionally, an oxygen-containing functional group is typically located at a defect site in the flexible carbon material, and the content of the oxygen-containing functional group can reflect a content of defect sites in the flexible carbon material. The defect sites may form micropores and serve as initial nucleation sites during metal deposition, reducing the nucleation barrier of the metal, shortening ion diffusion distance, and constructing a sodium-philic interface, thereby facilitating the regulation of the metal deposition morphology on the negative electrode.

In any embodiment, the oxygen-containing functional group includes one or more of carbonyl group -C=O-, hydroxyl group -OH, carboxylic acid group -COOH, ester group -COO-, and ether group - O-. These oxygen-containing functional groups have a binding energy with metal that is greater than an adsorption energy of the flexible carbon material, facilitating the regulation of the metal deposition morphology on the negative electrode, making it easier for the metal to deposit on the negative electrode and contributing to the formation of a uniform metal layer, thereby contributing to the high energy density and excellent cycling performance of the battery.

In any embodiment, I_{D}/I_{G} of the flexible carbon material is 1.40 to 1.90, optionally 1.50 to 1.88, where I_{D} represents an integrated area of a D peak at 1350±50 cm⁻¹ in a Raman spectrum of the flexible carbon material, and T_{G} represents an integrated area of a G peak at 1580±50 cm⁻¹ in a Raman spectrum of the flexible carbon material. When I_{D}/I_{G} of the flexible carbon material is within the above range, the flexible carbon material has an appropriate quantity of micropores and oxygen-containing functional groups, facilitating the regulation of the metal deposition morphology on the negative electrode, making it easier for the metal to deposit on the negative electrode and contributing to the formation of a uniform metal layer, thereby contributing to the high energy density and excellent cycling performance of the battery.

In any embodiment, the pore volume V_{mic} of the micropores with a pore diameter less than or equal to 0.8 nm is 0.30 cm³/g to 0.85 cm³/g, optionally 0.37 cm³/g to 0.75 cm³/g.

In any embodiment, the pore volume of the flexible carbon material Vₜₒₜₐₗ is 0.33 cm³/g to 0.89 cm³/g, optionally 0.43 cm³/g to 0.78 cm³/g.

Through further adjustment of the pore volume V_{mic} of the micropores with a pore diameter less than or equal to 0.8 nm and/or the pore volume Vₜₒₜₐₗ of the flexible carbon material to be within the above range, the metal deposition morphology on the negative electrode can be further regulated, contributing to the high energy density and excellent cycling performance of the battery.

In any embodiment, an average pore diameter of the flexible carbon material is 0.50 nm to 3.50 nm, optionally 0.65 nm to 1.80 nm.

In any embodiment, a specific surface area of the flexible carbon material is 150 m²/g to 1200 m²/g.

In any embodiment, an interlayer spacing of a 002 crystal plane of the flexible carbon material is 0.35 nm to 0.40 nm. The larger interlayer spacing of the 002 crystal plane of the flexible carbon material can increase the metal storage space.

In any embodiment, an electrical conductivity of the flexible carbon material is 2 S/cm to 200 S/cm.

In any embodiment, a thickness of the coating is less than or equal to 4 µm, optionally 1 µm to 2 µm. The thickness of the coating being within the above range facilitates the regulation of the metal deposition morphology on the negative electrode and contributes to the formation of a uniform metal layer, contributing to excellent cycling performance of the battery while ensuring the high energy density and high Coulombic efficiency of the battery.

In any embodiment, a content of the flexible carbon material in the coating is 60wt% or more, based on a total weight of the coating. This facilitates the regulation of the metal deposition morphology on the negative electrode, making it easier for the metal to deposit on the negative electrode and contributing to the formation of a uniform metal layer, thereby contributing to the high energy density and excellent cycling performance of the battery.

In any embodiment, the coating further includes a binder, and a content of the binder is 40wt% or less, based on the total weight of the coating.

In any embodiment, the negative electrode current collector includes one or more of a metal substrate and a composite substrate.

In any embodiment, a thickness of the negative electrode current collector is 1 µm to 20 µm.

According to a second aspect of this application, a preparation method for a negative electrode is provided, including the steps of: providing an initial flexible carbon material; subjecting the initial flexible carbon material to heat treatment in a low-oxygen atmosphere to obtain a flexible carbon material, where the flexible carbon material includes micropores with a pore diameter less than or equal to 0.8 nm, a pore volume of the micropores with a pore diameter less than or equal to 0.8 nm is denoted as V_{mic}, a pore volume of the flexible carbon material is denoted as Vₜₒₜₐₗ, both in units of cm³/g, and V_{mic}:Vₜₒₜₐₗ≥65:100; dispersing the obtained flexible carbon material in a solvent to prepare a coating slurry; and applying the coating slurry onto at least one surface of a negative electrode current collector, followed by drying to obtain a negative electrode.

In any embodiment, the low-oxygen atmosphere includes oxygen, and a volume fraction of oxygen is 15% to 40%, optionally 18% to 30%. Optionally, the low-oxygen atmosphere further includes one or more of N₂, He, Ar, CO, CO₂, and H₂O.

In any embodiment, the heat treatment temperature is 600°C to 1000°C, optionally 650°C to 800°C.

In any embodiment, the heat treatment time is 1 h to 3 h.

In the step of subjecting the initial flexible carbon material to heat treatment in the low-oxygen atmosphere, through adjustment of the volume fraction of oxygen, heat treatment temperature, and heat treatment time within the above ranges, the resulting flexible carbon material can have an appropriate quantity of micropores with a pore diameter less than or equal to 0.8 nm and oxygen-containing functional groups, thereby facilitating the regulation of the metal deposition morphology on the negative electrode, making it easier for the metal to deposit on the negative electrode and contributing to the formation of a uniform metal layer, thereby contributing to the high energy density and excellent cycling performance of the battery.

In any embodiment, the coating slurry further includes a binder.

According to a third aspect of this application, a battery cell is provided, including the negative electrode according to the first aspect of this application or the negative electrode prepared by using the method according to the second aspect of this application.

In any embodiment, the battery cell includes an anode-free sodium metal battery cell.

According to a fourth aspect of this application, a battery is provided, including the battery cell according to the third aspect of this application.

According to a fifth aspect of this application, an electric apparatus is provided, including the battery according to the fourth aspect of this application.

The battery provided in this application has the high energy density and excellent cycling performance, and therefore the electric apparatus provided in this application including the battery provided by this application has at least the same advantages as the battery.

### BRIEF DESCRIPTION OF DRAWINGS

To illustrate the technical solutions of the embodiments of this application more clearly, the drawings required for the embodiments of this application are briefly introduced below. It is evident that the drawings described below are merely some embodiments of this application, and those skilled in the art can obtain other drawings based on these drawings without creative effort.
FIG. 1 is a schematic diagram of a battery cell according to an embodiment of this application.
FIG. 2 is a schematic exploded view of the battery cell according to the embodiment in FIG. 1.
FIG. 3 is a schematic diagram of a battery module according to an embodiment of this application.
FIG. 4 is a schematic diagram of a battery pack according to an embodiment of this application.
FIG. 5 is a schematic exploded view of the battery pack according to the embodiment in FIG. 4.
FIG. 6 is a schematic diagram of an electric apparatus including a battery as a power source according to an embodiment of this application.

In the drawings, the drawings are not necessarily drawn to actual scale. The description of reference signs is as follows: 1 battery pack; 2 upper box; 3 lower box; 4 battery module; 5 battery cell; 51 housing; 52 electrode assembly; and 53 cover plate.

### DESCRIPTION OF EMBODIMENTS

Hereinafter, embodiments specifically disclosing a negative electrode and a preparation method therefor, a battery cell containing the same, a battery, and an electric apparatus are described in detail with appropriate reference to the drawings. However, unnecessary detailed descriptions may be omitted. For example, detailed descriptions of well-known matters or redundant descriptions of substantially identical structures may be omitted. This is to avoid unnecessarily lengthy descriptions and facilitate understanding by those skilled in the art. Additionally, the drawings and the following description are provided to enable those skilled in the art to fully understand this application and are not intended to limit the subject matter recited in the claims.

The "ranges" disclosed in this application are defined in the form of lower and upper limits, where a given range is defined by selecting a lower limit and an upper limit, and the selected lower and upper limits define the boundaries of a specific range. Ranges defined in this manner may be inclusive or exclusive of the endpoints and can be arbitrarily combined, meaning any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise stated, the numerical range "a-b" represents an abbreviated representation of any combination of real numbers between a and b, where both a and b are real numbers. For example, the numerical range "0-5" means that all real numbers between "0-5" are listed herein, and "0-5" is merely an abbreviated representation of these numerical combinations. Additionally, when a parameter is expressed as an integer greater than or equal to 2, it is equivalent to disclosing that the parameter is, for example, the integer 2, 3, 4, 5, 6, 7, 8, 9, 10, 11, 12, and the like.

Unless otherwise specified, all embodiments and optional embodiments of this application can be combined with each other to form new technical solutions, and such technical solutions are considered to be included in the disclosure of this application.

Unless otherwise specified, all technical features and optional technical features of this application can be combined with each other to form new technical solutions, and such technical solutions are considered to be included in the disclosure of this application.

Unless otherwise specified, all steps of this application can be performed sequentially or randomly, preferably sequentially. For example, the method including steps (a) and (b) means that the method may include steps (a) and (b) performed sequentially, or steps (b) and (a) performed sequentially. For example, if the method is mentioned to further include step (c), it means that step (c) can be added to the method in any position, for example, the method may include steps (a), (b), and (c), or steps (a), (c), and (b), or steps (c), (a), and (b), or the like.

Unless otherwise specified, the terms "include" and "comprise" mentioned in this application denote an open-ended or closed-ended inclusion. For example, "include" and "comprise" may mean that other components not listed can also be included or comprised, or only the listed components are included or comprised.

Unless otherwise specified, the term "or" in this application is inclusive. For example, the phrase "A or B" means "A, B, or both A and B." More specifically, any of the following conditions satisfy the condition "A or B": A is true (or present) and B is false (or not present); A is false (or not present) and B is true (or present); or both A and B are true (or present).

In this application, the terms "multiple" and "plurality" refer to two or more.

In this application, unless otherwise specified, the terms used have the commonly understood meanings by those skilled in the art.

Unless otherwise specified, the numerical values of the parameters mentioned in this application can be measured using various test methods commonly used in the art, for example, they can be measured according to the test methods provided in the embodiments of this application. Unless otherwise specified, the test temperature for each parameter is 25°C.

Unless otherwise specified, the ratio parameters mentioned in this application are compared with units being the same. For example, if the pore volume ratio between A and B is 1:1, the units of the pore volumes of A and B are the same.

The battery mentioned in the embodiments of this application may be a single physical module including one or more battery cells to provide higher voltage and capacity. For example, the battery mentioned in this application may include a battery cell, a battery module, a battery pack, or the like.

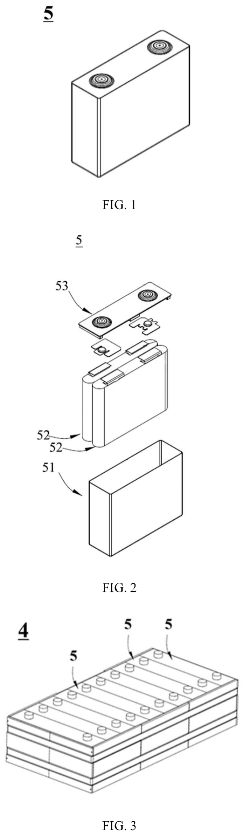

A battery cell is the smallest unit constituting a battery, capable of independently performing charge and discharge functions. The battery cell may be cylindrical, flat, or cuboidal, or in another shape, which is not limited in the embodiments of this application. FIG. 1 shows a battery cell 5 with a cuboidal structure as an example.

When there are multiple battery cells, the multiple battery cells are connected in series, parallel, or series-parallel via a busbar component. In some embodiments, the battery may be a battery module; when there are multiple battery cells, the multiple battery cells are arranged and fixed to form a battery module. In some embodiments, the battery may be a battery pack, including a box and a battery cell, where the battery cell or battery module is accommodated in the box. In some embodiments, the box may a part of the chassis structure of a vehicle. For example, a part of the box may form at least a portion of the floor of the vehicle, or a part of the box may form at least a part of a crossbeam or longitudinal beam of the vehicle.

In some embodiments, the battery may be an energy storage apparatus. Energy storage apparatuses include energy storage containers, energy storage cabinets, and the like.

A battery cell generally includes an electrode assembly. The electrode assembly typically includes a positive electrode and a negative electrode, and the electrode assembly may have a wound structure or a stacked structure, which is not limited in the embodiments of this application.

The battery cell may further include an outer packaging, and the outer packaging can be used to encapsulate the electrode assembly and electrolyte. The outer packaging may be a hard shell, such as a hard plastic shell, aluminum shell, or steel shell. The outer packaging may alternatively be a soft pack, such as a soft pouch. A material of the soft pouch may be plastic, such as one or more of polypropylene (PP), polybutylene terephthalate (PBT), and polybutylene succinate (PBS).

In some embodiments, as shown in FIG. 2, the outer packaging may include a housing 51 and a cover plate 53. The housing 51 may include a bottom plate and a side plate connected to the bottom plate, where the bottom plate and side plate enclose a receiving cavity. The housing 51 has an opening communicating with the receiving cavity, and the cover plate 53 is used to cover the opening to seal the receiving cavity. The electrode assembly 52 is encapsulated in the receiving cavity. One or more electrode assemblies 52 may be contained in the battery cell 5. This can be adjusted according to requirements.

In some embodiments, battery cells can be assembled into a battery module, and multiple battery cells may be contained in the battery module. The specific quantity can be adjusted according to the application and capacity of the battery module. FIG. 3 is a schematic diagram of a battery module 4 as an example. As shown in FIG. 3, in the battery module 4, multiple battery cells 5 may be arranged sequentially along a length direction of the battery module 4. Certainly, they can also be arranged in any other manner. Further, the multiple battery cells 5 can be fixed by fasteners.

Optionally, the battery module 4 may further include a housing with a receiving space. The multiple battery cells 5 are accommodated in the receiving space.

In some embodiments, the above battery modules can be further assembled into a battery pack, and the quantity of battery modules contained in the battery pack can be adjusted according to the application and capacity of the battery pack.

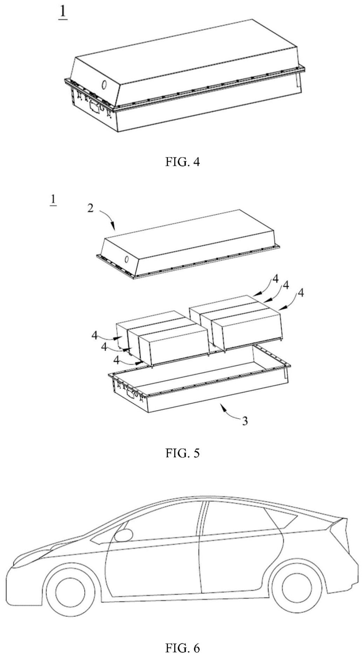

FIG. 4 and FIG. 5 are schematic diagrams of a battery pack 1 as an example. As shown in FIG. 4 and FIG. 5, the battery pack 1 may include a box and multiple battery modules 4 disposed in the box. The box includes an upper box 2 and a lower box 3, where the upper box 2 is used to cover the lower box 3, forming a closed space for accommodating the battery modules 4. The multiple battery modules 4 may be arranged in the box in any manner.

The battery cell provided in the embodiments of this application may include an anode-free sodium metal battery cell or the like. This is not limited in the embodiments of this application.

An anode-free metal battery cell generally refers to a battery cell constructed without actively disposing a negative electrode active material layer on a negative electrode side during the manufacturing process of the battery cell, for example, without forming a negative electrode active material layer by providing a metal layer or a carbonaceous active material layer at the negative electrode through coating, depositing, or the like during the manufacturing process of the battery cell. During the first charge, ions receive electrons on the negative electrode side and deposit on a surface of the negative electrode current collector to form a metal phase; during discharge, the metal can transform into metal ions returning to the positive electrode, achieving cyclic charge and discharge. Compared with other battery cells, anode-free metal batteries can achieve higher energy density due to the absence of a negative electrode active material layer.

In some embodiments, to improve battery performance, some materials conventionally used as negative electrode active materials, such as carbon materials, may be disposed on the negative electrode side of an anode-free metal battery. Although these materials have a certain capacity, their contents are low and they are not used as the primary negative electrode active materials in battery cells, so such battery cells can still be considered anode-free metal battery cells.

A CB value of an anode-free metal battery is typically small, for example, in some embodiments, the CB value of an anode-free metal battery may be less than or equal to 0.1.

A CB value is a capacity per unit area of a negative electrode divided by a capacity per unit area of a positive electrode in a battery cell. Since an anode-free metal battery cell contains no or only a small amount of negative electrode active material, the capacity per unit area of the negative electrode is small, resulting in a small CB value, typically less than or equal to 0.1.

In an anode-free metal battery, since the metal deposited on a negative electrode has high activity and nucleation potential and is prone to react with an electrolyte, the deposition of metal on a surface of a negative electrode current collector is uneven, easily causing instability in a solid electrolyte interface (SET) film formed on the negative electrode surface. Therefore, the anode-free metal battery often suffers from low Coulombic efficiency and short cycle life. Additionally, during battery charge, the metal is directly deposited on the negative electrode current collector, causing volume changes in the negative electrode, posing significant challenges to structural design and assembly of the battery.

Another issue with anode-free metal batteries is the insufficient controllability of a morphology of the metal deposited on the negative electrode, leading to dendrite growth on the negative electrode. The continued dendrite growth may pierce a separator, causing an internal short circuit in the battery. Disposing a layer of carbon material on the surface of the negative electrode current collector helps regulate the metal deposition. Currently, carbon materials used in negative electrodes are mostly prepared by using methods such as hard template, soft template, template-free, chemical activation, or physical activation, resulting in carbon materials with pore structures primarily formed by mesopores and/or macropores, which still have insufficient controllability over the metal morphology, leading to uneven metal deposition on the negative electrode surface during charge. In this case, the negative electrode surface is prone to dendrite growth, hindering capacity performance of the battery and reducing the energy density of the battery.

In view of this, the inventors have improved a structure of a negative electrode.

A negative electrode provided in an embodiment of this application includes a negative electrode current collector and a coating disposed on at least one surface of the negative electrode current collector. The coating includes a flexible carbon material, where the flexible carbon material includes micropores with a pore diameter less than or equal to 0.8 nm, a pore volume of the micropores with a pore diameter less than or equal to 0.8 nm is denoted as V_{mic}, a pore volume of a flexible carbon material is denoted as Vₜₒₜₐₗ, and V_{mic}:Vₜₒₜₐₗ≥65:100. The negative electrode provided in this embodiment of this application includes a negative electrode current collector and a coating disposed on at least one surface of the negative electrode current collector. The coating includes a flexible carbon material. The flexible carbon material generally refers to a carbon material that can maintain good performance even after being bent, folded, twisted, compressed, stretched, or deformed into any shape.

The flexible carbon material may exhibit excellent conductivity and stability, enabling the construction of an effective conductive network in the negative electrode, thereby reducing an internal resistance of the battery. The flexible carbon material includes micropores with a pore diameter less than or equal to 0.8 nm, and a ratio of the pore volume V_{mic} of the micropores with a pore diameter less than or equal to 0.8 nm to the pore volume Vₜₒₜₐₗ of the flexible carbon material is V_{mic}:Vₜₒₜₐₗ≥65: 100, whereby the flexible carbon material has a pore structure primarily including micropores with a pore diameter less than or equal to 0.8 nm. These micropores are typically located at the positions of edge carbon atoms in the flexible carbon material, which can reduce an overpotential of a metal (such as sodium), and serve as initial nucleation sites during deposition of a metal (such as sodium), thereby lowering a nucleation barrier of the metal (such as sodium), thus facilitating the regulation of a metal morphology during deposition on the negative electrode. Therefore, during battery charge, a uniform metal layer can be formed on the negative electrode surface provided in this embodiment of this application, and dendrites can be reduced, particularly, formation and growth of dendrites with sharp morphologies can be alleviated, thereby ensuring the high energy density and excellent cycling performance of the battery.

The pore volume can be tested using the nitrogen adsorption method at a test temperature of 77 K (that is, liquid nitrogen temperature). For test standards, reference may be made to GB/T 21650-2008 and GB/T 19587-2017. The test equipment may include an analyzer for surface area and pore diameter distribution, such as the MFA-100 series, SSA-7000 series, and SSA-4000 series. This is not limited in this embodiment of this application.

An exemplary test method is as follows: a sample is degassed by heating and vacuuming to remove physically adsorbed impurities from a sample surface; a weight of the sample is then measured; the sample is placed in liquid nitrogen; and then at a liquid nitrogen temperature, nitrogen adsorption amounts of the sample are measured at pre-set different pressure points to obtain a nitrogen adsorption isotherm of the sample.

The nitrogen adsorption isotherm of the flexible carbon material in the negative electrode provided in this embodiment of this application conforms to Type I adsorption isotherm (IUPAC classification).

A pore diameter distribution plot may be obtained by using the BJH method based on the data obtained from the test by using the nitrogen adsorption method. Through fitting of the peak areas (integrated areas) of pores of different pore diameters in the pore diameter distribution plot, a pore volume V_{mic} of the micropores with a pore diameter less than or equal to 0.8 nm, a pore volume Vₜₒₜₐₗ of the flexible carbon material, and their ratio V_{mic}:Vₜₒₜₐₗ can be obtained.

In some embodiments, V_{mic}:Vₜₒₜₐₗ may be greater than or equal to 70:100, 75:100, 80:100, 85:100, or 90:100.

Optionally, 65:100≤V_{mic}:Vₜₒₜₐₗ≤96:100, 70:100≤V_{mic}:Vₜₒₜₐₗ≤96:100, 75:100≤V_{mic}:Vₜₒₜₐₗ≤96:100, 80:100≤V_{mic}:Vₜₒₜₐₗ≤96:100, 85:100≤V_{mic}:Vₜₒₜₐₗ≤96:100, or 90:100≤V_{mic}:Vₜₒₜₐₗ≤96:100.

Through further adjustment of the ratio of the pore volume V_{mic} of the micropores with a pore diameter less than or equal to 0.8 nm to the pore volume Vₜₒₜₐₗ of the flexible carbon material to be within the above range, the metal deposition morphology on the negative electrode can be further regulated, contributing to a high energy density and excellent cycling performance of the battery.

In some embodiments, the pore volume V_{mic} of the micropores with a pore diameter less than or equal to 0.8 nm may be 0.30 cm³/g to 0.85 cm³/g, optionally 0.37 cm³/g to 0.75 cm³/g.

In some embodiments, the pore volume of the flexible carbon material Vₜₒₜₐₗ may be 0.33 cm³/g to 0.89 cm³/g, optionally 0.43 cm³/g to 0.78 cm³/g.

Through further adjustment of the pore volume V_{mic} of the micropores with a pore diameter less than or equal to 0.8 nm and/or the pore volume Vₜₒₜₐₗ of the flexible carbon material to be within the above range, the metal deposition morphology on the negative electrode can be further regulated, contributing to the high energy density and excellent cycling performance of the battery.

In some embodiments, the flexible carbon material may include one or more of carbon nanotubes, carbon fibers, and graphene.

Optionally, the carbon nanotubes may include one or more of single-walled carbon nanotubes, multi-walled carbon nanotubes, and single-walled/multi-walled blended carbon nanotubes.

Optionally, the graphene may include one or more of single-layer graphene, bilayer graphene, and multi-layer graphene.

Optionally, the carbon fibers may include one or more of polymer-based carbon fibers and pitch-based carbon fibers. As an example, polymer-based carbon fibers may include, but are not limited to, polyacrylonitrile (PAN)-based carbon fibers.

In some embodiments, a surface of the flexible carbon material has an oxygen-containing functional group, and a content of the oxygen-containing functional group in the flexible carbon material may be 7at% to 15at%, optionally 8at% to 13at%.

The oxygen-containing functional group can modify the flexible carbon material, expanding an interlayer spacing and increasing a metal storage space. Additionally, an oxygen-containing functional group is typically located at a defect site in the flexible carbon material, and a content of the oxygen-containing functional group can reflect a content of defect sites in the flexible carbon material. The defect sites may form micropores and serve as initial nucleation sites during metal (such as sodium) deposition, reducing the nucleation barrier of the metal (such as sodium), shortening ion diffusion distance, and constructing a sodium-philic interface, thereby facilitating the regulation of the metal deposition morphology on the negative electrode.

The content of the oxygen-containing functional group can be tested using X-ray photoelectron spectroscopy (XPS). A type of the functional group can be determined based on a peak position. Contents of oxygen-containing functional groups can be calculated based on integrated areas of peaks corresponding to different functional groups.

In some embodiments, the oxygen-containing functional groups may include one or more of carbonyl group -C=O-, hydroxyl group -OH, carboxylic acid group -COOH, ester group -COO-, and ether group -O-.

These oxygen-containing functional groups have a binding energy with metal (such as sodium) that is greater than an adsorption energy of the flexible carbon material, facilitating the regulation of the metal deposition morphology on the negative electrode, making it easier for the metal to deposit on the negative electrode and contributing to the formation of a uniform metal layer, thereby contributing to the high energy density and excellent cycling performance of the battery.

Take sodium metal deposition as an example. Binding energies of carbonyl group -C=O-, hydroxyl group -OH, carboxylic acid group -COOH, ether group -O-, and ester group -COO- with sodium metal are -2.82 eV, -0.93 eV, -1.3 eV, -1.18 eV, and -1.79 eV, respectively, all of which are greater than the adsorption energy of the flexible carbon material (that is, -0.78 eV), indicating that sodium metal is more likely to deposit on the negative electrode.

In some embodiments, I_{D}/I_{G} of the flexible carbon material may be 1.40 to 1.90, optionally 1.50 to 1.88, where I_{D} represents an integrated area of a D peak at 1350±50 cm⁻¹ in a Raman spectrum of the flexible carbon material, and I_{G} represents an integrated area of a G peak at 1580±50 cm⁻¹ in the Raman spectrum of the flexible carbon material.

When I_{D}/I_{G} of the flexible carbon material is within the above range, the flexible carbon material has an appropriate quantity of micropores and oxygen-containing functional groups, facilitating the regulation of the metal deposition morphology on the negative electrode, making it easier for the metal to deposit on the negative electrode and contributing to the formation of a uniform metal layer, thereby contributing to the high energy density and excellent cycling performance of the battery.

In some embodiments, the average pore diameter of the flexible carbon material may be 0.50 nm to 3.50 nm, optionally 0.65 nm to 1.80 nm.

The average pore diameter of the flexible carbon material is a well-known term in the art and can be measured using known instruments and methods in the art. For example, it can be tested using the nitrogen adsorption method at a test temperature of 77 K. For test standards, reference may be made to GB/T 21650-2008 and GB/T 19587-2017. The test equipment may include an analyzer for surface area and pore diameter distribution, such as the MFA-100 series, SSA-7000 series, and SSA-4000 series. This is not limited in the embodiments of this application.

In some embodiments, a specific surface area of the flexible carbon material may be 150 m²/g to 1200 m²/g.

The specific surface area of the flexible carbon material is a well-known term in the art and can be measured using known instruments and methods in the art. For example, it can be tested using the nitrogen adsorption method and calculated using the BET method at a test temperature of 77 K. The test standards may refer to GB/T 21650-2008 and GB/T 19587-2017. The test equipment may include a surface area and pore diameter distribution analyzer, such as the MFA-100 series, SSA-7000 series, and SSA-4000 series, which is not limited by the embodiments of this application.

In some embodiments, an interlayer spacing of the 002 crystal plane of the flexible carbon material may be 0.35 nm to 0.40 nm. The larger interlayer spacing of the 002 crystal plane of the flexible carbon material can increase the metal storage space.

The interlayer spacing of the 002 crystal plane of the flexible carbon material is a well-known term in the art and can be tested using known instruments and methods in the art. For example, it can be tested using an X-ray diffractometer (such as Bruker D8 Discover). For the test, reference may be made to JIS K 0131-1996 and JB/T 4220-2011. An average interlayer spacing d₀₀₂ of the 002 crystal plane in the crystal structure of the flexible carbon material is obtained. In the X-ray diffraction analysis test, CuKα radiation may be used as a radiation source, with a radiation wavelength λ of 1.5418 Å, a scanning 2θ angle range of 20° to 80°, and a scanning rate of 4°/min.

In some embodiments, an electrical conductivity of the flexible carbon material may be 2 S/cm to 200 S/cm.

The electrical conductivity of the flexible carbon material may be obtained by testing a resistivity of the flexible carbon material, and the reciprocal of the resistivity is used as the electrical conductivity. A test temperature is 25°C. For test standards, reference may be made to GB/T 32993-2016.

In some embodiments, a thickness of the coating may be less than or equal to 4 µm, optionally 1 µm to 2 µm. The thickness of the coating being within the above range facilitates the regulation of the metal deposition morphology on the negative electrode and contributes to the formation of a uniform metal layer, contributing to excellent cycling performance of the battery while ensuring the high energy density and high Coulombic efficiency of the battery.

In some embodiments, a content of the flexible carbon material in the coating may be 60wt% or more, based on a total weight of the coating. This facilitates the regulation of the metal deposition morphology on the negative electrode, making it easier for the metal to deposit on the negative electrode and contributing to the formation of a uniform metal layer, thereby contributing to the high energy density and excellent cycling performance of the battery.

In some embodiments, the coating further includes a binder. Optionally, a content of the binder is 40wt% or less, based on the total weight of the coating. Optionally, the binder may include one or more of styrene-butadiene rubber (SBR), water-soluble unsaturated resin SR-1B, water-based acrylic resin (such as polyacrylic acid PAA, polymethacrylic acid PMAA, or sodium polyacrylate PAAS), polyacrylamide (PAM), polyvinyl alcohol (PVA), sodium alginate (SA), sodium carboxymethyl cellulose (CMC), and carboxymethyl chitosan (CMCS).

The content of the flexible carbon material in the coating may be tested through thermogravimetric analysis.

In some embodiments, a thickness of the negative electrode current collector may be 1 µm to 20 µm, optionally 3 µm to 12 µm. This is not limited in the embodiments of this application.

In some embodiments, the negative electrode current collector may include one or more of a metal substrate and a composite substrate.

In some embodiments, the metal substrate may further have a porous structure.

As examples of the metal substrate, one or more of copper foil, aluminum foil, nickel foil, titanium foil, copper alloy foil, aluminum alloy foil, nickel alloy foil, titanium alloy foil, copper mesh, nickel mesh, foamed copper, and foamed nickel may be used.

The composite substrate may include a polymer material base layer and a metal material layer formed on at least one surface of the polymer material base layer. As examples, the metal material may include one or more of copper, copper alloy, aluminum, aluminum alloy, nickel, nickel alloy, titanium, titanium alloy, silver, and silver alloy. As examples, the polymer material base layer may include one or more of polypropylene (PP), polyethylene terephthalate (PET), polybutylene terephthalate (PBT), polystyrene (PS), and polyethylene (PE).

### [Preparation method]

An embodiment of this application further provides a preparation method for the above negative electrode.

The method includes the following steps: providing an initial flexible carbon material; subjecting the initial flexible carbon material to heat treatment in a low-oxygen atmosphere to obtain a flexible carbon material, where the obtained flexible carbon material includes micropores with a pore diameter less than or equal to 0.8 nm, a pore volume of the micropores with a pore diameter less than or equal to 0.8 nm is denoted as V_{mic}, a pore volume of the flexible carbon material is denoted as Vₜₒₜₐₗ, and V_{mic}:Vₜₒₜₐₗ≤65:100; dispersing the obtained flexible carbon material in a solvent to prepare a coating slurry; and applying the coating slurry onto at least one surface of the negative electrode current collector, followed by drying to obtain the negative electrode.

Subjecting the initial flexible carbon material to heat treatment in a low-oxygen atmosphere can introduce an oxygen-containing functional group into the flexible carbon material, where the oxygen-containing functional group may replace carbon atoms at the edges of the flexible carbon material and form micropores.

In some embodiments, the initial flexible carbon material may include one or more of carbon nanotubes, carbon fibers, and graphene. The initial flexible carbon material can be commercially obtained.

In some embodiments, the low-oxygen atmosphere may include oxygen, and a volume fraction of oxygen may be 15% to 40%, optionally 18% to 30%.

In some embodiments, the low-oxygen atmosphere may further include one or more of N₂, He, Ar, CO, CO₂, and H₂O.

In some embodiments, the low-oxygen atmosphere may be air.

In some embodiments, the temperature for heat treatment of the initial flexible carbon material in the low-oxygen atmosphere is 600°C to 1000°C, optionally 650°C to 800°C.

In some embodiments, a time for heat treatment of the initial flexible carbon material in the low-oxygen atmosphere may be 1 h to 3 h.

In the step of subjecting the initial flexible carbon material to heat treatment in the low-oxygen atmosphere, through adjustment of the volume fraction of oxygen, heat treatment temperature, and heat treatment time within the above ranges, the resulting flexible carbon material can have an appropriate quantity of micropores with a pore diameter less than or equal to 0.8 nm and oxygen-containing functional groups (the oxygen-containing functional groups may include one or more of carbonyl group -C=O-, hydroxyl group -OH, carboxylic acid group - COOH, ester group -COO-, and ether group -O-), thereby facilitating the regulation of the metal deposition morphology on the negative electrode, making it easier for the metal to deposit on the negative electrode and contributing to the formation of a uniform metal layer, thereby contributing to the high energy density and excellent cycling performance of the battery.

In some embodiments, the solvent includes one or more of water and organic solvents. This is not limited in this embodiment of this application.

In some embodiments, the coating slurry may further include a binder. Optionally, the binder may include one or more of styrene-butadiene rubber (SBR), water-soluble unsaturated resin SR-1B, water-based acrylic resin (such as polyacrylic acid PAA, polymethacrylic acid PMAA, or sodium polyacrylate PAAS), polyacrylamide (PAM), polyvinyl alcohol (PVA), sodium alginate (SA), sodium carboxymethyl cellulose (CMC), and carboxymethyl chitosan (CMCS).

According to the preparation method provided in this embodiment of this application, the negative electrode as described above can be prepared. For parameters of the negative electrode, reference can be made to the negative electrode described above. Details are not repeated herein. In the negative electrode preparation process, unless otherwise specified, the equipment and raw materials used can be commercially obtained.

### [Positive electrode]

The battery cell includes a positive electrode.

The positive electrode includes a positive electrode current collector and a positive electrode film layer disposed on at least one surface of the positive electrode current collector, where the positive electrode film layer includes a positive electrode active material. The positive electrode current collector has two opposite surfaces in its thickness direction, and the positive electrode film layer is disposed on either or both of the two opposite surfaces of the positive electrode current collector.

The positive electrode active material may be a material known in the art. For example, the positive electrode active material may include, but is not limited to, one or more of a sodium-containing transition metal oxide, polyanionic material (such as a phosphate, fluorophosphate, pyrophosphate, or sulfate), and Prussian blue material.

As examples, the positive electrode active material may include NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, Na_{2/3}Fe_{1/3}Mn_{2/3}O₂, NaNi_{1/3}Co_{1/3}Mn_{1/3}O₂, Na_{2/3}Cu_{1/3}Mn_{2/3}P₂, Na_{2/3}Li_{1/3}Ni_{2/3}O₂, NaNi_{0.5}Co_{0.5}O₂, Na_{7/9}Cu_{2/9}Fe_{1/9}Mn_{2/3}O₂, Na_{2/3}Li_{1/3}Mn_{1/2}Ti_{1/6}O₂, NaNi_{0.5}Fe_{0.5}O₂, NaCo_{0.5}Fe_{0.5}O₂, NaNi_{1/3}Fe_{1/3}Mn_{1/3}O₂, NaCu_{1,9}Ni_{2/9}Fe_{1/3}Mn_{1/3}O₂, NaFePO₄, NaMnPO₄, NaCoPO₄, a Prussian blue material, and a material with the general formula XₚM'_{q}(PO₄)ᵣOₓY₃₋ₓ. In the general formula XₚM'_{q}(PO₄)ᵣOₓY₃₋ₓ, 0<p≤4, 0<q≤2, 1≤r≤3, 0≤x≤2, X includes one or more of H⁺, Li⁺, Na⁺, K⁺, and NH₄⁺, M' includes a transition metal, optionally including one or more of V, Ti, Mn, Fe, Co, Ni, Cu, and Zn, and Y includes a halogen, optionally including one or more of F, Cl, and Br. These positive electrode active materials may be used alone or in combination of two or more.

In some embodiments, the positive electrode film layer may optionally further include a positive electrode conductive agent. This application has no particular limitation on a type of positive electrode conductive agent. As examples, the positive electrode conductive agent may include one or more of superconducting carbon, conductive graphite, acetylene black, carbon black, Ketjen black, carbon dots, carbon nanotubes, graphene, and carbon nanofibers.

In some embodiments, the positive electrode film layer may optionally further include a positive electrode binder. This application has no particular limitation on a type of positive electrode binder. As examples, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylate resin, styrene-butadiene rubber (SBR), water-soluble unsaturated resin SR-1B, water-based acrylic resin (such as polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS).

In some embodiments, the positive electrode current collector may be a metal foil or a composite current collector. As an example of the metal foil, an aluminum foil may be used. The composite current collector may include a polymer material base layer and a metal material layer formed on at least one surface of the polymer material base layer. As examples, the metal material may include one or more of aluminum, aluminum alloy, nickel, nickel alloy, titanium, titanium alloy, silver, and silver alloy. As examples, the polymer material base layer may include one or more of polypropylene (PP), polyethylene terephthalate (PET), polybutylene terephthalate (PBT), polystyrene (PS), and polyethylene (PE).

The positive electrode film layer is typically formed by applying a positive electrode slurry onto the positive electrode current collector, followed by drying and cold pressing. The positive electrode slurry is usually formed by dispersing the positive electrode active material, optional conductive agent, optional binder, and any other components in a solvent and stirring uniformly. The solvent may be N-methylpyrrolidone (NMP), but is not limited thereto.

### [Electrolyte]

The battery cell includes an electrolyte. This application has no specific limitation on a type of electrolyte, which can be selected according to requirements. For example, the electrolyte may include one or more of a solid electrolyte, a gel electrolyte, and a liquid electrolyte (that is, electrolytic solution).

In some embodiments, the electrolyte is an electrolytic solution, where the electrolytic solution includes an electrolyte salt and a solvent.

A type of electrolyte salt is not specifically limited and can be selected according to actual requirements. In some embodiments, as examples, the electrolyte salt may include one or more of NaPF₆, NaClO₄, NaBCl₄, NaSO₃CF₃, and Na(CH₃)C₆H₄SO₃.

A type of solvent is not specifically limited and can be selected according to actual requirements, for example, it may include one or more of an ester solvent, a sulfone solvent, and an ether solvent. In some embodiments, as examples, the solvent may include ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE), tetrahydrofuran (THF), 2-methyltetrahydrofuran, 1,3-dioxolane, 4-methyl-1,3-dioxolane, dimethoxymethane, diethoxymethane, dipropoxymethane, 1,2-dimethoxyethane, 1,2-dimethoxypropane, 1,2-diethoxyethane, ethylene glycol methyl ethyl ether, diethylene glycol dimethyl ether, triethylene glycol dimethyl ether, and tetraethylene glycol dimethyl ether.

In some embodiments, the electrolytic solution may optionally further include an additive. For example, the additive may include a negative electrode film-forming additive, positive electrode film-forming additive, and additives that improve certain battery performances, such as additives that improve overcharge performance, high-temperature performance, or low-temperature power performance of the battery.

### [Separator]

In battery cells using an electrolytic solution and battery cells using a solid electrolyte, a separator may further be included. The separator is disposed between the positive electrode and the negative electrode, primarily to prevent internal short circuits.

This application has no particular limitation on a type of separator, and any well-known porous structure separator with good chemical and mechanical stability can be used.

In some embodiments, a material of the separator may include one or more of glass fiber, non-woven fabric, polyethylene, polypropylene, and polyvinylidene fluoride. The separator may be a single-layer film or a multilayer composite film. When the separator is a multilayer composite film, materials of layers may be the same or different.

The preparation method for the battery cell is well-known. In some embodiments, the positive electrode, separator, negative electrode, and electrolytic solution may be assembled to form a battery cell. As an example, the positive electrode, separator, and negative electrode may be formed into an electrode assembly through a winding process and/or a lamination process, and the electrode assembly is placed in an outer packaging and dried. Then the above electrolytic solution is injected, followed by processes such as vacuum encapsulation, standing, formation, and shaping to obtain the battery cell. Multiple battery cells may further be connected in series, parallel, or series-parallel to form a battery module. Multiple battery modules may further be connected in series, parallel, or series-parallel to form a battery pack. In some embodiments, multiple battery cells may directly form a battery pack.

### Electric apparatus

An embodiment of this application further provides an electric apparatus, where the electric apparatus includes the battery provided in the embodiments of this application. The battery may be used as a power source or an energy storage unit for the electric apparatus. The electric apparatus may include, but is not limited to, mobile devices (such as mobile phones, tablets, and laptops), electric vehicles (such as pure electric vehicles, hybrid electric vehicles, plug-in hybrid electric vehicles, electric bicycles, electric scooters, electric golf carts, and electric trucks), electric trains, ships, satellites, energy storage systems, and the like.

A type of the battery can be selected for the electric apparatus based on its usage requirements, for example, may be a battery cell, battery module, or battery pack.

FIG. 6 is a schematic diagram of an electric apparatus as an example. The electric apparatus is a pure electric vehicle, hybrid electric vehicle, or plug-in hybrid electric vehicle. To meet the requirements of high power and high energy density of the electric apparatus, a battery pack or battery module can be used.

As another example, the electric apparatus may be a mobile phone, tablet, or laptop. Such electric apparatuses typically require thin and light designs, and a battery cell may be used as a power source.

### Examples

The following examples describe the content disclosed in this application more specifically, and these examples are provided solely for illustrative purposes, as various modifications and changes within the scope of this application's disclosure are apparent to those skilled in the art. Unless otherwise stated, all parts, percentages, and ratios reported in the following examples are based on weight, all reagents used in the examples are commercially available or synthesized according to conventional methods and can be used directly without further processing, and all instruments used in the examples are commercially available.

### Example 1

Commercially available single-walled carbon nanotubes (non-porous structure with I_{D}/I_{G} of 0.91 to 1.1, a specific surface area of 300 m²/g, and an interlayer spacing of the 002 crystal plane of 0.34 nm) were subjected to heat treatment in an air atmosphere at 600°C for 2 h to obtain a flexible carbon material.

The obtained flexible carbon material and a binder CMC were dispersed in deionized water solvent at a weight ratio of 70:30 to prepare a coating slurry; the coating slurry was applied onto a negative electrode current collector aluminum foil, and after drying, a negative electrode was obtained. A coating thickness was 2 nm.

A positive electrode active material NaNi_{1/3}Fe_{1/3}Mn_{1/3}O₂, conductive agent carbon black Super P, and binder polyvinylidene fluoride (PVDF) were ground and mixed uniformly at a weight ratio of 90:5:5, an appropriate amount of solvent N-methylpyrrolidone (NMP) was added, and the mixture was stirred uniformly to obtain a positive electrode slurry. The positive electrode slurry was evenly applied onto a positive electrode current collector aluminum foil, followed by drying and cold pressing to obtain a positive electrode.

Ethylene carbonate (EC) and diethyl carbonate (DEC) were mixed in equal volumes to obtain an organic solvent, and anhydrous NaClO₄ was dissolved in the organic solvent to prepare an electrolytic solution with a concentration of 1 mol/L.

The prepared positive electrode, separator (a 12-µm polypropylene film), and negative electrode were cut into appropriately sized discs and assembled in the order of negative electrode shell, negative electrode, separator, positive electrode, and positive electrode shell, with the separator impregnated with the above electrolytic solution, followed by pressing to obtain a coin cell.

### Examples 2 to 5

A preparation method for the coin cell was similar to that of Example 1, with the difference being the heat treatment temperature for preparing the flexible carbon material. The heat treatment temperature for Example 2 was 700°C, for Example 3 was 800°C, for Example 4 was 900°C, and for Example 5 was 1000°C.

### Examples 6 to 8

The preparation method for the coin cell was similar to that of Example 1, with the difference being the heat treatment atmosphere for preparing the flexible carbon material. The heat treatment atmosphere was a mixed gas of oxygen and argon. The volume fraction of oxygen in the heat treatment atmosphere for Example 6 was 15%, for Example 7 was 30%, and for Example 8 was 40%.

### Examples 9 to 13

The preparation method for the coin cell was similar to that of Example 1, with the difference being the thickness of the coating in the negative electrode. The coating thickness for Example 9 was 0.5 µm, for Example 10 was 1 µm, for Example 11 was 1.5 µm, for Example 12 was 4 µm, and for Example 13 was 5 µm.

### Example 14

The preparation method for the coin cell was similar to that of Example 1, with the difference being the type of initial flexible carbon material used for preparing the flexible carbon material.

Commercially available multilayer graphene (non-porous structure with I_{D}/I_{G} of ~0.05, a specific surface area of 700 m²/g, and an interlayer spacing of the 002 crystal plane of 0.34 nm) was subjected to heat treatment in an air atmosphere at 600°C for 2 h to obtain a flexible carbon material.

The obtained flexible carbon material and a binder CMC were dispersed in deionized water solvent at a weight ratio of 70:30 to prepare a coating slurry; the coating slurry was applied onto a negative electrode current collector aluminum foil, and after drying, a negative electrode was obtained. The coating thickness was 2 nm.

### Examples 15 to 17

The preparation method for the coin cell was similar to that of Example 14, with the difference being the heat treatment atmosphere and/or heat treatment temperature for preparing the flexible carbon material. The heat treatment temperature for Example 15 was 700°C, for Example 16 was 1000°C, and for Example 17 was 700°C with a heat treatment atmosphere of a mixed gas of oxygen and argon, with an oxygen volume fraction of 40%.

### Example 18

The preparation method for the coin cell was similar to that of Example 1, with the difference being the type of initial flexible carbon material used for preparing the flexible carbon material.

Commercially available polyacrylonitrile-based carbon fibers (non-porous structure with I_{D}/I_{G} of ~0.05, a specific surface area of 1000 m²/g, and an interlayer spacing of the 002 crystal plane of 0.34 nm) were subjected to heat treatment in an air atmosphere at 600°C for 2 h to obtain a flexible carbon material.

The obtained flexible carbon material and a binder CMC were dispersed in deionized water solvent at a weight ratio of 70:30 to prepare a coating slurry; the coating slurry was applied onto a negative electrode current collector aluminum foil, and after drying, a negative electrode was obtained. The coating thickness was 2 nm.

### Examples 19 to 21

The preparation method for the coin cell was similar to that of Example 18, with the difference being the heat treatment atmosphere and/or heat treatment temperature for preparing the flexible carbon material. The heat treatment temperature for Example 19 was 700°C, for Example 20 was 1000°C, and for Example 21 was 700°C with a heat treatment atmosphere of a mixed gas of oxygen and argon, with an oxygen volume fraction of 40%.

### Comparative example 1

The preparation method for the coin cell was similar to that of Example 1, with the difference being the preparation process of the negative electrode.

Single-walled carbon nanotubes (non-porous structure with T_{D}/T_{G} of 0.91 to 1.1, a specific surface area of 300 m²/g, and an interlayer spacing of the 002 crystal plane of 0.34 nm) and a binder CMC were dispersed in deionized water solvent at a weight ratio of 70:30 to prepare a coating slurry; the coating slurry was applied onto a negative electrode current collector aluminum foil, and after drying, a negative electrode was obtained. The coating thickness was 2 nm.

### Comparative example 2

The preparation method for the coin cell was similar to that of Example 1, with the difference being the preparation process of the negative electrode.

Single-walled carbon nanotubes (non-porous structure with I_{D}/I_{G} of 0.91 to 1.1, a specific surface area of 300 m²/g, and an interlayer spacing of the 002 crystal plane of 0.34 nm) were mixed with a KOH or K₂CO₃ activator at a mass ratio of 3:1, and subjected to heat treatment in an argon atmosphere at 700°C for 2 h; then the treated powder was placed in a 2 mol/L HCl solution for a water bath for 6 h with the temperature maintained at 60°C, washed repeatedly with deionized water to neutrality, and dried to obtain a flexible carbon material, where a pore structure of the flexible carbon material was primarily mesopores and/or macropores.

The obtained flexible carbon material and a binder CMC were dispersed in deionized water solvent at a weight ratio of 70:30 to prepare a coating slurry; the coating slurry was applied onto a negative electrode current collector aluminum foil; and after drying, a negative electrode was obtained. The coating thickness was 2 nm.

### Comparative example 3

The preparation method for the coin cell was similar to that of Example 14, with the difference being the preparation process of the negative electrode.

Commercially available multilayer graphene (non-porous structure with T_{D}/T_{G} of ~0.05, a specific surface area of 700 m²/g, an interlayer spacing of the 002 crystal plane of 0.34 nm) and a binder CMC were dispersed in deionized water solvent at a weight ratio of 70:30 to prepare a coating slurry; the coating slurry was applied onto a negative electrode current collector aluminum foil, and after drying, a negative electrode was obtained. The coating thickness was 2 nm.

### Comparative example 4

The preparation method of the coin cell was similar to that of Example 14, with the difference being the preparation process of the negative electrode.

Commercially available multilayer graphene (non-porous structure with I_{D}/I_{G} of ~0.05, a specific surface area of 700 m²/g, an interlayer spacing of the 002 crystal plane of 0.34 nm) was mixed with a KOH or K₂CO₃ activator at a mass ratio of 3:1, and subjected to heat treatment in an argon atmosphere at 700°C for 2 h; and then the treated powder was placed in a 2 mol/L HCl solution for a water bath for 6 h with a temperature maintained at 60°C, washed repeatedly with deionized water to neutrality, and dried to obtain a flexible carbon material, where a pore structure of the flexible carbon material was primarily mesopores and/or macropores.

The obtained flexible carbon material and a binder CMC were dispersed in deionized water solvent at a weight ratio of 70:30 to prepare a coating slurry; the coating slurry was applied onto a negative electrode current collector aluminum foil; and after drying, a negative electrode was obtained. The coating thickness was 2 nm.

### Comparative example 5

The preparation method of the coin cell was similar to that of Example 18, with the difference being the preparation process of the negative electrode.

Commercially available polyacrylonitrile-based carbon fibers (non-porous structure with I_{D}/I_{G} of ~0.05, a specific surface area of 1000 m²/g, and an interlayer spacing of the 002 crystal plane of 0.34 nm) and a binder CMC were dispersed in deionized water solvent at a weight ratio of 70:30 to prepare a coating slurry; the coating slurry was applied onto a negative electrode current collector aluminum foil; and after drying, a negative electrode was obtained. The coating thickness was 2 nm.

### Comparative example 6

The preparation method for the coin cell was similar to that of Example 18, with the difference being the preparation process of the negative electrode.

Commercially available polyacrylonitrile-based carbon fibers (non-porous structure with T_{D}/T_{G} of ~0.05, a specific surface area of 1000 m²/g, an interlayer spacing of the 002 crystal plane of 0.34 nm) were mixed with a KOH or K₂CO₃ activator at a mass ratio of 3:1, and subjected to heat treatment in an argon atmosphere at 700°C for 2 h; and then the treated powder was placed in a 2 mol/L HCl solution for a water bath for 6 h with the temperature maintained at 60°C, washed repeatedly with deionized water to neutrality, and dried to obtain a flexible carbon material, where a pore structure of the flexible carbon material was primarily mesopores and/or macropores.

The obtained flexible carbon material and a binder CMC were dispersed in deionized water solvent at a weight ratio of 70:30 to prepare a coating slurry; the coating slurry was applied onto a negative electrode current collector aluminum foil; and after drying, a negative electrode was obtained. The coating thickness was 2 nm.

### Test section

### (1) Coating thickness test

The prepared negative electrode was cut into a 6 cm×6 cm square sample using scissors, and polished using an ion cross-section polisher (such as IB-19500CP) to obtain a polished sample with a cut surface. TEM images were obtained using a transmission electron microscope, and 10 positions were randomly selected from the images to measure the coating thickness, with an average taken as a test result.

### (2) Battery capacity test

At 25°C, the coin cell was charged at a constant current of 36 mA to 3.95 V to obtain a first charge capacity of the coin cell; and then discharged at a constant current of 36 mA to 1.5 V to obtain a first discharge capacity of the coin cell.

Initial specific capacity (mAh/g) of positive electrode active material=first discharge capacity of coin cell/mass of positive electrode active material.

Initial Coulombic efficiency of coin cell=first discharge capacity of coin cell/first charge capacity of coin cell.

### (3) Battery cycling performance test

At 25°C, the coin cell was charged at a constant current of 36 mA to 3.95 V, then discharged at a constant current of 100 mA to 1.5 V to obtain the first cycle discharge capacity of the coin cell. The coin cell was subjected to cyclic charge-discharge tests according to the above method, recording a discharge capacity after each cycle until the discharge capacity of the coin cell after cycling reached 80% of the first cycle discharge capacity. The number of cycles of the coin cell was recorded.

The test results are shown in Tables 1 to 3.

**Table 1**

| No. | Flexible carbon material | | | | | | | | Coating thickness (µm) | Battery performance | | |
|---|---|---|---|---|---|---|---|---|---|---|---|---|
| | V_{mic} (cm³/g) | Vₜₒₜₐₗ (cm³/g) | V_{mic}: Vₜₒₜₐₗ | Average pore diameter (nm) | Content of oxygen-containing functional group (at%) | T_{D}/T_{G} | Specific surface area (m²/g) | Interlayer spacing (nm) | | Initial specific capacity (mAh/g) | Initial Coulombic efficiency | Cycles |
| Example 1 | 0.45 | 0.50 | 0.90 | 0.64 | 8 | 1.65 | 645 | 0.36 | 2 | 101 | 87.5% | 990 |
| Example 2 | 0.75 | 0.78 | 0.96 | 0.70 | 10 | 1.76 | 703 | 0.37 | 2 | 110 | 89.0% | 1500 |
| Example 3 | 0.62 | 0.69 | 0.90 | 1.20 | 12 | 1.88 | 800 | 0.40 | 2 | 108 | 87.0% | 1200 |
| Example 4 | 0.49 | 0.70 | 0.70 | 1.45 | 11 | 1.85 | 750 | 0.38 | 2 | 105 | 83.0% | 1080 |
| Example 5 | 0.47 | 0.72 | 0.65 | 2.50 | 12 | 1.80 | 780 | 0.38 | 2 | 101 | 80.0% | 1040 |
| Example 6 | 0.47 | 0.49 | 0.96 | 0.65 | 8 | 1.60 | 605 | 0.36 | 2 | 103 | 87.5% | 1060 |
| Example 7 | 0.56 | 0.75 | 0.75 | 1.80 | 13 | 1.80 | 800 | 0.40 | 2 | 109 | 86.0% | 1200 |
| Example 8 | 0.51 | 0.73 | 0.70 | 3.00 | 15 | 1.85 | 830 | 0.40 | 2 | 103 | 80.0% | 1000 |
| Example 9 | 0.75 | 0.78 | 0.96 | 0.70 | 10 | 1.76 | 703 | 0.37 | 0.5 | 102 | 88.0% | 1010 |
| Example 10 | 0.75 | 0.78 | 0.96 | 0.70 | 10 | 1.76 | 703 | 0.37 | 1 | 105 | 87.0% | 1180 |
| Example 11 | 0.75 | 0.78 | 0.96 | 0.70 | 10 | 1.76 | 703 | 0.37 | 1.5 | 107 | 88.0% | 1250 |
| Example 12 | 0.75 | 0.78 | 0.96 | 0.70 | 10 | 1.76 | 703 | 0.37 | 4 | 110 | 83.0% | 1500 |
| Example 13 | 0.75 | 0.78 | 0.96 | 0.70 | 10 | 1.76 | 703 | 0.37 | 5 | 115 | 80.0% | 1500 |
| Comparative example 1 | / | / | / | / | / | / | / | / | 2 | 98 | 79.0% | 900 |
| Comparative example 2 | 0.05 | 0.80 | 0.06 | 4.50 | 30 | 1.93 | 950 | 0.40 | 2 | 95 | 75.0% | 850 |

**Table 2**

| No. | Flexible carbon material | | | | | | | | Coating thickness (µm) | Battery performance | | |
|---|---|---|---|---|---|---|---|---|---|---|---|---|
| | V_{mic} (cm³/g) | Vₜₒₜₐₗ (cm³/g) | V_{mic}: Vₜₒₜₐₗ | Average pore diameter (nm) | Content of oxygen-containing functional group (at%) | I_{D}/I_{G} | Specific surface area (m²/g) | Interlayer spacing (nm) | | Initial specific capacity (mAh/g) | Initial Coulombic efficiency | Cycles |
| Example 14 | 0.50 | 0.52 | 0.96 | 0.50 | 7 | 1.60 | 780 | 0.35 | 2 | 100 | 87.0% | 1000 |
| Example 15 | 0.43 | 0.49 | 0.86 | 0.78 | 10 | 1.68 | 840 | 0.37 | 2 | 108 | 88.9% | 1450 |
| Example 16 | 0.62 | 0.89 | 0.70 | 3.00 | 12 | 1.75 | 900 | 0.40 | 2 | 101 | 83.0% | 1040 |
| Example 17 | 0.49 | 0.63 | 0.78 | 3.50 | 15 | 1.80 | 870 | 0.40 | 2 | 102 | 80.0% | 1025 |
| Comparative example 3 | / | / | / | / | / | / | / | / | 2 | 97 | 78.0% | 890 |
| Comparative example 4 | 0.05 | 0.80 | 0.06 | 5.20 | 25 | 1.90 | 920 | 0.40 | 2 | 92 | 75.0% | 800 |

**Table 3**

| No. | Flexible carbon material | | | | | | | | Coating thickness (µm) | Battery performance | | |
|---|---|---|---|---|---|---|---|---|---|---|---|---|
| | V_{mic} (cm³/g) | Vₜₒₜₐₗ (cm³/g) | V_{mic}: Vₜₒₜₐₗ | Average pore diameter (nm) | Content of oxygen-containing functional group (at%) | I_{D}/I_{G} | Specific surface area (m²/g) | Interlayer spacing (nm) | | Initial specific capacity (mAh/g) | Initial Coulombic efficiency | Cycles |
| Example 18 | 0.30 | 0.33 | 0.90 | 0.80 | 7 | 1.50 | 1150 | 0.35 | 2 | 102 | 87.0% | 980 |
| Example 19 | 0.37 | 0.43 | 0.86 | 0.86 | 8 | 1.60 | 1158 | 0.36 | 2 | 109 | 88.6% | 1420 |
| Example 20 | 0.40 | 0.47 | 0.85 | 1.25 | 9 | 1.62 | 1162 | 0.36 | 2 | 105 | 85.0% | 1020 |
| Example 21 | 0.48 | 0.66 | 0.73 | 1.56 | 13 | 1.78 | 1179 | 0.38 | 2 | 109 | 83.0% | 1000 |
| Comparative example 5 | / | / | / | / | / | / | / | / | 2 | 96 | 75.0% | 870 |
| Comparative example 6 | 0.10 | 0.80 | 0.13 | 3.20 | 18 | 1.89 | 1300 | 0.40 | 2 | 94 | 70.0% | 780 |

From the test results in Tables 1 to 3, it can be learned that subjecting the initial flexible carbon material to heat treatment in a low-oxygen atmosphere can introduce an oxygen-containing functional group into the flexible carbon material, where the oxygen-containing functional group may replace carbon atoms at the edges of the flexible carbon material and form micropores with a pore diameter less than or equal to 0.8 nm.

With the ratio between the pore volume V_{mic} of the micropores with a pore diameter less than or equal to 0.8 nm and the pore volume Vₜₒₜₐₗ of the flexible carbon material adjusted to V_{mic}:Vₜₒₜₐₗ≥65:100, the overpotential of sodium can be reduced, the nucleation barrier of sodium can be lowered, thereby facilitating the regulation of the sodium deposition morphology on the negative electrode, and ensuring the high energy density, high Coulombic efficiency, and excellent cycling performance of the battery.

It should be noted that this application is not limited to the above embodiments. The above embodiments are merely examples, and embodiments having substantially the same configuration and achieving the same effects as the technical idea within the scope of the technical solutions of this application are included in the technical scope of this application. Additionally, within the scope not departing from the gist of this application, various modifications that can be conceived by those skilled in the art applied to the embodiments and other configurations constructed by combining some constituent elements of the embodiments are also included in the scope of this application.

## Claims

1. A negative electrode, comprising a negative electrode current collector and a coating disposed on at least one surface of the negative electrode current collector, wherein
the coating comprises a flexible carbon material, wherein the flexible carbon material comprises micropores with a pore diameter less than or equal to 0.8 nm, a pore volume of the micropores with a pore diameter less than or equal to 0.8 nm is denoted as V_{mic}, a pore volume of the flexible carbon material is denoted as Vₜₒₜₐₗ, both in units of cm³/g, and V_{mic}:Vₜₒₜₐₗ≥65:100.

2. The negative electrode according to claim 1, wherein V_{mic}:Vₜₒₜₐₗ≥70:100, optionally, 85:100≤V_{mic}:Vₜₒₜₐₗ≤96:100,

3. The negative electrode according to claim 1 or 2, wherein the flexible carbon material comprises one or more of carbon nanotubes, carbon fibers, and graphene;
optionally, the carbon nanotubes comprise one or more of single-walled carbon nanotubes, multi-walled carbon nanotubes, and single-walled/multi-walled blended carbon nanotubes; and/or
optionally, the graphene comprises one or more of single-layer graphene, bilayer graphene, and multi-layer graphene; and/or
optionally, the carbon fibers comprise one or more of polymer-based carbon fibers and pitch-based carbon fibers.

4. The negative electrode according to any one of claims 1 to 3, wherein a surface of the flexible carbon material has an oxygen-containing functional group, and a content of the oxygen-containing functional group in the flexible carbon material is 7at% to 15at%, optionally 8at% to 13at%.

5. The negative electrode according to claim 4, wherein the oxygen-containing functional group comprises one or more of carbonyl group -C=O-, hydroxyl group -OH, carboxylic acid group -COOH, ester group - COO-, and ether group -O-.

6. The negative electrode according to any one of claims 1 to 5, wherein I_{D}/I_{G} of the flexible carbon material is 1.40 to 1.90, optionally 1.50 to 1.88, wherein I_{D} represents an integrated area of a D peak at 1350±50 cm⁻¹ in a Raman spectrum of the flexible carbon material, and I_{G} represents an integrated area of a G peak at 1580±50 cm⁻¹ in a Raman spectrum of the flexible carbon material.

7. The negative electrode according to any one of claims 1 to 6, wherein
the pore volume V_{mic} of the micropores with a pore diameter less than or equal to 0.8 nm is 0.30 cm³/g to 0.85 cm³/g, optionally 0.37 cm³/g to 0.75 cm³/g; and/or
the pore volume Vₜₒₜₐₗ of the flexible carbon material is 0.33 cm³/g to 0.89 cm³/g, optionally 0.43 cm³/g to 0.78 cm³/g.

8. The negative electrode according to any one of claims 1 to 7, wherein
an average pore diameter of the flexible carbon material is 0.50 nm to 3.50 nm, optionally 0.65 nm to 1.80 nm; and/or
a specific surface area of the flexible carbon material is 150 m²/g to 1200 m²/g; and/or
an interlayer spacing of a 002 crystal plane of the flexible carbon material is 0.35 nm to 0.40 nm; and/or
an electrical conductivity of the flexible carbon material is 2 S/cm to 200 S/cm.

9. The negative electrode according to any one of claims 1 to 8, wherein
a thickness of the coating is less than or equal to 4 µm, optionally 1 µm to 2 µm; and/or
a content of the flexible carbon material in the coating is 60wt% or more, based on a total weight of the coating; and/or
the coating further comprises a binder, and a content of the binder is 40wt% or less, based on the total weight of the coating.

10. The negative electrode according to any one of claims 1 to 9, wherein
the negative electrode current collector comprises one or more of a metal substrate and a composite substrate; and/or
a thickness of the negative electrode current collector is 1 µm to 20 µm.

11. A preparation method for a negative electrode, comprising steps:
providing an initial flexible carbon material;
subjecting the initial flexible carbon material to heat treatment in a low-oxygen atmosphere to obtain a flexible carbon material, wherein the flexible carbon material comprises micropores with a pore diameter less than or equal to 0.8 nm, a pore volume of the micropores with a pore diameter less than or equal to 0.8 nm is denoted as V_{mic}, a pore volume of the flexible carbon material is denoted as Vₜₒₜₐₗ, both in units of cm³/g, and V_{mic}:≤V_{mic}:Vₜₒₜₐₗ≥65:100;
dispersing the obtained flexible carbon material in a solvent to prepare a coating slurry; and
applying the coating slurry onto at least one surface of a negative electrode current collector, followed by drying to obtain a negative electrode.

12. The method according to claim 11, wherein
the low-oxygen atmosphere comprises oxygen, and a volume fraction of oxygen is 15% to 40%, optionally 18% to 30%; and
optionally, the low-oxygen atmosphere further comprises one or more of N₂, He, Ar, CO, CO₂, and H₂O.

13. The method according to claim 11 or 12, wherein
a heat treatment temperature is 600°C to 1000°C, optionally 650°C to 800°C; and/or
a heat treatment time is 1 h to 3 h.

14. The method according to any one of claims 11 to 13, wherein the coating slurry further comprises a binder.

15. A battery cell, comprising the negative electrode according to any one of claims 1 to 10, or the negative electrode prepared by using the method according to any one of claims 11 to 14.

16. The battery cell according to claim 15, wherein the battery cell comprises an anode-free sodium metal battery cell.

17. A battery, comprising the battery cell according to claim 15 or 16.

18. An electric apparatus, comprising the battery according to claim 17.
